# EUROPÄISCHE PATENTSCHRIFT

(11) **EP 0 932 983 B1**
(45) Veröffentlichungstag und Bekanntmachung des Hinweises auf die Patenterteilung: **24.10.2001**
(21) Anmeldenummer: 97929123.4
(22) Anmeldetag: 20.06.1997
(51) Int. Cl.: H04Q 1/10, H05K 5/02, H05K 7/14, H04Q 1/02, H01R 9/26

(54) **FERNMELDEVERMITTLUNGSANLAGE**
TELEPHONE EXCHANGE
CENTRAL TELEPHONIQUE

(30) Priorität: 17.10.1996 DE 19642953
(43) Veröffentlichungstag der Anmeldung: 04.08.1999
(73) Patentinhaber: Tenovis GmbH & Co. KG, 60362 Frankfurt am Main (DE)
(72) Erfinder: KRAEMER, Dieter, D-65510 Idstein (DE); HELFRICH, Burkhard, D-68649 Gro -Rohrheim (DE); KETTELER, Alfons, D-64287 Darmstadt (DE); KEUCHEL, Helmut, D-35410 Hungen (DE); MAYER, Helmut, R., D-61231 Bad Nauheim (DE)
(74) Vertreter: Meissner, Bolte & Partner
(86) Internationale Anmeldenummer: DE9701268
(87) Internationale Veröffentlichungsnummer: WO9818266

(56) Entgegenhaltungen:
- EP-A- 0 132 152
- EP-A- 0 658 076
- EP-A- 0 661 915
- DE-U- 9 309 977
- DE-U- 29 512 474
- GB-A- 1 424 231
- GB-A- 2 014 367

## Beschreibung

### Stand der Technik

Die Erfindung geht von einer Fernmeldevermittlungsanlage nach der im Oberbegriff des Anspruchs 1 angegebenen Gattung aus.

Eine derartige Anlage mit an einer Schiene verschiebbar angeordneten Modulen ist bereits aus der EP 0661 915 A bekannt. Die Modulgehäuse werden mit einem an der Rückseite des Modulgehäuses angeordneten Einhängeteil in ein Aufhängeteil der Schiene eingehängt. Durch seitliches verschieben der Module sind an den Seitenwänden der Modulgehäuse angeordnete Stecker miteinander kontaktierbar. Das Modulgehäuse ist um den Auflagebereich von Einhängeteil und Aufhängeteil an der Schiene schwenkbar, wobei sich das Modulgehäuse mit seinem unteren Abschnitt entgegen einem durch die Gewichtskraft des Moduls hervorgerufenen Drehmoment am Ende der Schwenkbewegung an der Wand oder der Schiene abstützt. An der Rückwand der Modulgehäuse ist ein Schieber ausgebildet, der beim Schwenken des Modulgehäuses gegen die Spannkraft eines Federelementes zurückgezogen werden muß und in der Endstellung nach oben gleitet und dadurch das Modulgehäuse an der Halteschiene verriegelt.

Weiterhin ist Aus der Druckschrift DE 44 47 183 A1 eine Fernmeldevermittlungsanlage mit einer an einer Wand befestigbaren Haltevorrichtung bekannt. Die Haltevorrichtung besteht aus einer Grundplatte, auf welcher eine Verbindungsleiterplatte und mehrere Anschlußleiterplatten angeordnet sind. Auf die Grundplatte können mehrere als geschlossene Metallgehäuse ausgebildete Module aufgesteckt werden, welche die zum Betreiben einer Fernmeldevermittlungsanlage notwendigen Einrichtungen beinhalten, wie zum Beispiel Anschluß- und Verbindungsleitungsschaltungen. Zu diesem Zweck weist jedes Modul auf seiner der Grundplatte zugewandten Seite zwei Stecker auf. Der Anschluß an das Bussystem und die Stromversorgung erfolgt über einen ersten Stecker, welcher mit einem auf der Verbindungsleiterplatte vorgesehenen Gegenstecker in Kontakt bringbar ist. Die Anschlüsse der Anschluß- und Verbindungsleitungen erfolgen über einen weiteren Stecker, der wiederum mit einem Anschlußstecker auf der zugehörigen Anschlußleiterplatte verbindbar ist. Die Stromversorgungseinrichtung weist äußerlich den gleichen Aufbau wie ein Vermittlungsmodul auf und ist ebenfalls über einen Stecker mit der Verbindungsleiterplatte verbunden. Zur Verbesserung der elektromagnetischen Verträglichkeit und zum Schutz der Module wird eine metallische Abdeckkappe auf die Grundplatte aufgesetzt und mit Rastmitteln daran befestigt. Nachteilig bei diesem Stand der Technik ist, daß die Befestigung der zum Anschluß der Module an ein Bussystem vorgesehenen Verbindungsleiterplatte eine komplizierte Haltemechanik aus Rastfedern und Auflagestegen erforderlich macht und die einzelnen Module nach dem Aufsetzen und Einstecken mit weiteren Rastmitteln an der Grundplatte befestigt werden müssen. Hierdurch wird die Handhabbarkeit beim Austausch einzelner Modulen erschwert. Besonders nachteilig ist, daß die als Haltevorrichtung vorgesehene Grundplatte nur eine vorgegebene, durch die Zahl der Steckplätze begrenzte Anzahl von Modulen aufnehmen kann. Es ist daher in manchen Fällen nicht möglich, die Anlage durch das Einsetzen weiterer Module den Kundenwünschen entsprechend zu erweitern. Umgekehrt sind Vorleistungen für den Erweiterungsfall, wie die Bereitstellung zusätzlicher Steckplätze, in solchen Fällen unnötig, in denen nur wenige Module benötigt werden. Insbesondere für kleine, auf das jeweilige Anforderungsprofil zugeschnittene Fernmeldevermittlungsanlagen ist daher das bekannte Konzept nicht flexibel genug einsetzbar.

### Vorteile der Erfindung

Die erfindungsgemäße Fernmeldevermittlungsanlage mit dem kennzeichnenden Merkmal des Hauptanspruchs besitzt den Vorteil, bei einfacher Konzeption äußerst flexibel einsetzbar und zugleich leicht handbabbar zu sein. Bestimmte Vorleistungen wie Steckplätze, Rastmittel zur Befestigung der Module an einer Grundplatte und eine zusätzliche Verbindungsleiterplatte zum Anschluß der Module an das Bussystem können eingespart werden, wodurch die Herstellungskosten gesenkt werden können. Statt einer aufwendig konstruierten Grundplatte wird eine einfache Schiene als Haltevorrichtung zur Festlegung der Fernmeldevermittlungsanlage an einer Wand verwandt. Die Module werden einfach mit entsprechenden Halteteilen auf die Schiene aufgesetzt. Durch Verschieben auf der Schiene können die Module über in den Seitenwänden vorgesehene Stecker miteinander in Kontakt gebracht werden, wobei das Bussystem durch alle Module hindurchgeführt wird. Mit nur wenigen Handgriffen kann die Anlage leicht um zusätzliche Module erweitert oder verkleinert werden. Eine Anpassung an das jeweilige Anorderungsprofil ist somit in optimaler Weise möglich. Als einzige Vorleistung muß nur die Schiene eine ausreichende Länge aufweisen. Beim Zusammenschieben der Module entsteht eine besonders kompakt aufgebaute Anlage. Besonders vorteilhaft ist, wenn die Module einfach mit einem an der Rückwand angeordneten Einhängeteil in ein korrespondierendes Aufhängeteil der Schiene eingehängt werden können, da dann beim Austauch eines Moduls oder der Ergänzung eines weiteren Moduls zwischen zwei bereits auf der Schiene angeordneten Modulen letztere nicht von der Schiene entfernt werden müssen. Die Steckverbindung zwischen den Modulen wird einfach durch Verschieben auf der Schienegelöst, das zusätzliche Modul wird dazwischen eingehängt und die Module werden wieder zusammengeschoben. Vorteilhaft ist weiterhin, daß die Modulgehäuse um einen gemeinsamen Auflagebereich von Einhängeteil und Aufhängeteil drehbar gelagert sind und sich mit einem von der Rückwand abstehenden Stützteil entgegen einem durch die Gewichtskraft des Moduls hervorgerufenen Drehmoment an der Wand oder der Schiene abstützen. Die Module können so problemlos in die Schiene eingehängt werden und richten sich zugleich unter dem Einfluß ihrer Gewichtskraft in einer durch das Stützteil vorbestimmten Lage mit vorzugsweise parallel zur Wand verlaufender Rückwand aus. Besonders vorteilhaft ist, wenn die Schiene einen in Verschieberichtung der Module konstanten Querschnitt aufweist und als Formteil mit einem Verbindungssteg ausgestaltet ist, der an seinem oberen Ende mit dem Aufhängeteil und an seinem unteren Ende mit einem Sicherungsteil versehen ist. Der Zwischenraum zwischen dem vom Modul abstehenden Ende des Einhängeteils und dem abstehenden Ende des Stützteils ist größer ausgebildet als die Breite des Verbindungssteges zusammen mit der Breite des sich daran anfügenden Sicherungsteils, so daß das Stützteil beim Einhängen des Moduls das mit dem Verbindungssteg verbundene Sicherungsteil hinterfaßt und durch die Auflage des Einhängeteils am Aufhängeteil gegen das Sicherungsteil vorgespannt ist. Das Modul ist gegen ein Herausrutschen aus der Schiene im Falle eines versehentlichen Anstoßens gesichert und aufgrund des konstanten Schienenquerschnitts weiterhin an der Schiene verschiebbar.

Weitere vorteilhafte Ausgestaltungen und Weiterbildungen der Erfindung werden durch die in den Unteransprüchen beschriebenen Merkmale ermöglicht.

Vorteilhaft ist, wenn der als Formteil ausgestalteten Schiene ein Auflageteil angeformt ist, auf welchem sich das Stützteil nach dem Einhängen des Moduls abstützt. Vorteilhaft ist weiterhin, wenn das Auflageteil eine ebene Fläche zur Auflage und Befestigung an der Wand aufweist.

Weiterhin vorteilhaft ist, wenn die Auflagebereiche von Einhängeteil und Aufhängeteil bzw. von Stützteil und Sicherungsteil eine im Querschnitt sphärische gekrümmte Form mit einem beiden Auflagebereichen gemeinsamen Krümmungsmittelpunkt aufweisen. Diese Ausführung ermöglicht, daß das Modul letztendlich durch eine Drehbewegung um den gemeinsamen Krümmungsmittelpunkt an der Schiene festgelegt wird, wobei das Stützteil während der Drehbewegung das Sicherungsteil der Schiene hinterfaßt. Bei einer derartigen Ausführung sind die Module besonders gut gegen eine Herausrutschen gesichert.

Ein Verkanten des Einhängeteils zwischen dem im Querschnitt sphärisch gekrümmten Aufhängeteil und der Wand beim Aufsetzen des Moduls auf die Schiene wird durch einen von dem Aufhängeteil zur Wand hin abstehenden Steg vorteilhaft vermieden.

Die Vorderseite kann einen zusätzlichen sich vorzugsweise in Verlängerung der Vorderwand erstreckenden Schenkel aufweisen, der als Handgriff das Einsetzen auf der Schiene erleichtert. Ein Anschlußstecker für die Anschluß- und Verbindungsleitungen wird einfach an der Unterseite durch eine Öffnung aus dem Modulgehäuse herausgeführt. Eine umständliche Kabelführung innerhalb der Fernmeldevermittlungsanlage entfällt.

Besonders vorteilhaft ist weiterhin, Oberseite, Rückwand, Unterseite und Vorderwand der Modulgehäuse als Strangpreßprofil mit rechteckigem Querschnitt auszubilden, das mit zwei daran festlegbaren Seitenwänden oder Seitendeckeln verschlossen werden kann. Die Länge des rohrförmigen Strangpreßprofils kann hierdurch auf sehr einfache Art direkt an die Länge der Leiterplatten angepaßt werden, die von dem betreffenden Modul aufgenommen werden soll. Für längere Leiterplatten wird einfach ein längeres Strangpreßprofil gleicher Breite und Höhe hergestellt. Der zusätzliche Platzbedarf für das längere Modul kann leicht durch Verschieben der übrigen Module auf der Schiene bereitgestellt werden. Vorteihaft ist, daß alle Module unabhängig von ihrer Länge mit dem gleichen Werkzeug hergestellt werden können und somit keine Kosten für die Bereitstellung zusätzlicher Werkzeuge entstehen.

Weiterhin ist vorteilhaft, daß die äußere Formgestaltung bzw. das Design der Module auf preiswerte Art dem jeweiligen Kundenwunsch angepaßt werden kann. Hierzu muß lediglich ein Strangpreßwerkzeug durch ein anderes ersetzt werden, was sehr viel kostengünstiger als beispielsweise der Austausch eines Werkzeugs zur Herstellung eines Spritzgußgehäuses ist. Die Innenkontur der Strangpreßprofile wird auch bei unterschiedlicher Formgestaltung gleichartig ausgebildet, so daß unabhängige vom Desigen die gleichen Leiterplatten und Seitenwände in die rohrförmigen Profile eingesetzt werden können. Vorteilhaft können in der Innenkontur der Strangpreßprofile Nuten zur Führung der Leiterplatten vorgesehen sein.

### Zeichnung

Ein Ausführungsbeispiel der Erfindung ist in der Zeichnung dargestellt und wird in der nachfolgenden Beschreibung näher erläutert. Es zeigt
Fig. 1 eine perspektivische Ansicht der Fernmeldevermittlungseinheit mit der Schiene und mehreren an der Schiene festgelegten Modulen,
Fig. 2a und 2b ein einzelnes als Strangpreßprofil ausgestaltetes Modulgehäuse mit aufsetzbaren Seitenwänden, das zwei mit Baugruppen bestückte Leiterplatten aufnimmt,
Fig. 3a - 3c einen Querschnitt durch die Schiene und ein Modul in drei verschiedenen Phasen des Einhängens des Moduls in die Schiene.

### Beschreibung des Ausführungsbeispiels

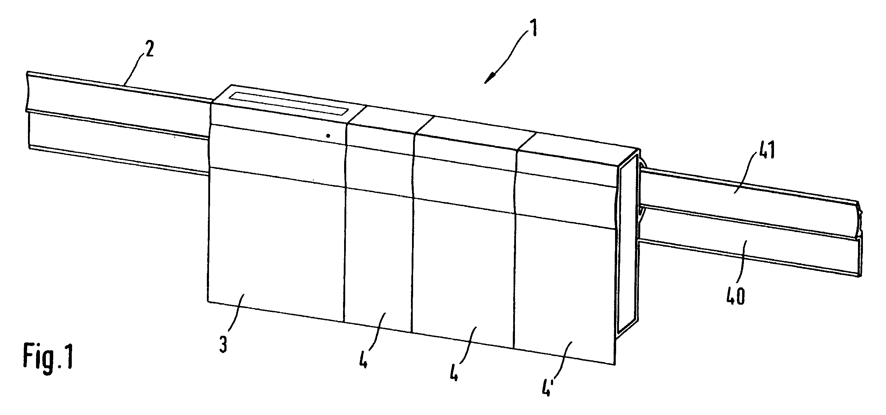

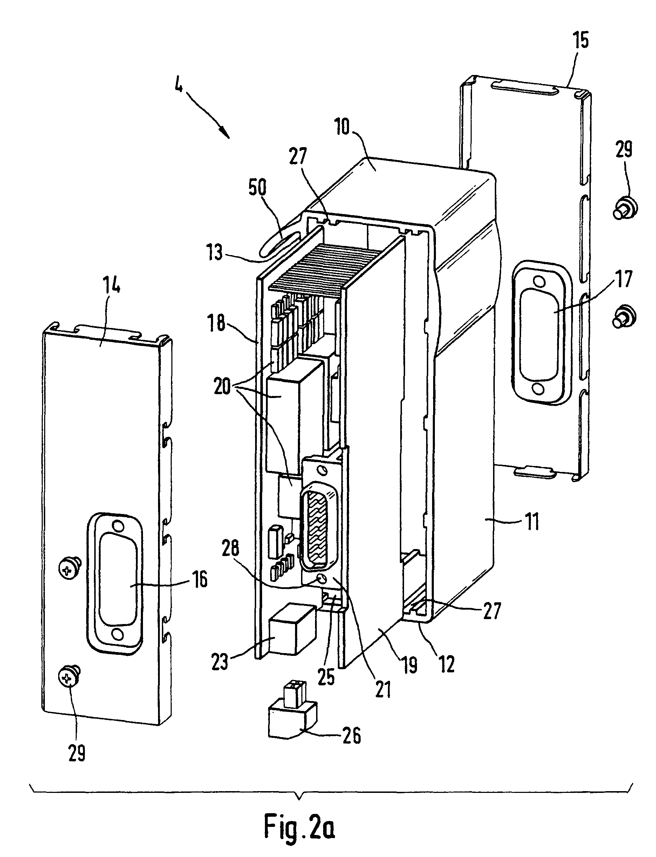

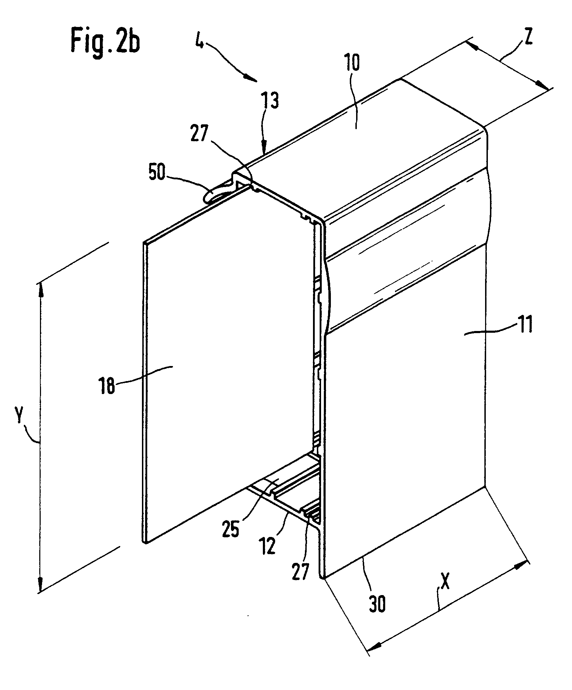

Fig. 1 zeigt eine perspektivische Ansicht einer erfindungsgemäßen Fernmeldevermittlungsanlage 1. Die Anlage besteht aus einer als Schiene 2 ausgebildeten Haltvorrichtung, an der mehrere Module 3,4 angeordnet sind. Die Schiene 2 ist einstückig aus Metall oder einem harten Kunstoff hergestellt. Beispielsweise kann die Schiene als Strangpreßprofil gefertigt werden. Es ist auch möglich, die Schiene aus mehreren Teilen zusammenzusetzen. Die Schiene 2 wird in dem hier gezeigten Ausführungsbeispiel horizontal an einer Wand 5 befestigt. Denbar ist auch, die Schiene vertikal an der Wand zu befestigen und die Module zum Beispiel mit schwalbenschwanzartigen Halteteilen zur Anordnung an der Schiene zu versehen. In dem hier gezeigten Beispiel werden die Module 4 einfach in die Schiene 2 eingehängt, wobei die Module 4 durch an der Schiene und an der Modulrückseite vorgesehene, komplementär zueinander ausgestaltete Verbindungsmittel (50,51,41,46) an der Schiene verschiebbar festgelegt werden. Die Module sind aus Gründen des EMV-Schutzes (elektromagnetische Verträglichkeit) aus Metall gefertigt und beinhalten die zum Betreiben der Anlage notwendigen Anschluß- und Verbindungsleitungsschaltungen. Wie in Fig. 2a gezeigt, werden die elektronischen Bauelemente 20 auf Leiterplatten 18,19 innerhalb der geschlossenen Modulgehäuse angeordnet. Die Modulgehäuse 4 bestehen aus rohrförmigen Aluminium-Strangpreßprofilen mit rechteckigem Querschnitt, welche Rückwand 13, Oberseite 10, Vorderwand 11 und Unterseite 12 bilden und mit aufsetzbaren Seitenwänden 14,15 verschlossen werden können, so daß ein gegen elektromagnetische Strahlung gut geschützter Raum entsteht. Die Außenseite der Module ist mit einem elektrischen Isolierstoff beschichtet. In der Innenkontur des Strangpreßprofiles sind an der Oberseite 10 und der Unterseite 12 Nuten 27 eingelassen, in welche die Leiterplatten 18,19 vor dem Aufsetzen der Seitenwände 14,15 durch die offenen Seiten der Strangpreßprofile eingeschoben werden. Dabei dienen die Nuten 27 der Führung und Halterung der Leiterplatten 18,19 innerhalb des Modulgehäuses 4. Im Falle einer nachträglichen Variantenänderung werden zusätzliche elektronische Bauelemente auf einer nur in Längsrichtung X (Fig. 2b) vergrößerten Leiterplatte 18 mit gleicher Höhe Y bestückt. Das Modulgehäuse 4 kann nun auf sehr einfache Weise durch eine Änderung der Profillänge X des Strangpreßprofiles entsprechend angepaßt werden. Da hierbei das gleiche Strangpreßwerkzeug benutzt werden kann, entstehen keine zusätzlichen Werkzeugkosten, was sich besonders vorteilhaft auf die Herstellungskosten neuer Module auswirkt.

An einer der in das Strangpreßprofil eingeschobenen Leiterplatten 18 (Fig. 2a) ist ein erster Stecker 21 zum Anschluß des Moduls 4 an ein Bussystem und eine Stromversorungseinheit vorgesehen. Der Stecker 21 ist so auf der Leiterplatte 18 angebracht, daß er einer der noch offenen Seiten des Strangpreßprofiles zugewandt ist. An derjenigen Seite der Leiterplatte 18, welche dem ersten Stecker 21 gegenüberliegt, befindet sich ein weiterer (dritter) Stecker, der als Gegenstecker zu dem ersten Stecker 21 ausgebildet ist. Der Gegenstecker ist in der Fig. 2a nicht erkennbar. Nach dem Einschieben der Leiterplatten 18 werden die offenen Seiten des Strangpreßprofiles mit metallischen Seitenwänden bzw. Seitendeckeln 14,15 verschlossen, die über entsprechende Haltemittel mit dem Strangpreßprofil verbindbar sind. Die Seitenwände 14,15 weisen jeweils eine Ausnehmung 16 bzw. 17 für den ersten bzw. den dritten Stecker auf. Beim Aufsetzen der Seitenwände 14,15 wird der erste Stecker 21 durch die entsprechende Ausnehmung 16 der Seitenwand 14 hindurchgeführt und steht mit den Steckkontakten ein Stück nach außen ab. Der an der gegenüberliegenden Seite 15 des Modulgehäuses vorgesehene dritte Stecker ist entsprechend als Steckerbuchse ausgebildet und dient zur Aufnahme der Steckkontakte des ersten Steckers eines benachbarten Moduls. Beide Stecker weisen Bohrungen 28 auf und werden mit Schrauben 29 an den Seitenwänden 14,15 befestigt. Die Ausnehmungen 16,17 in den Seitenwänden werden durch die beiden Stecker gegen elektromagnetische Strahlung dicht verschlossen.

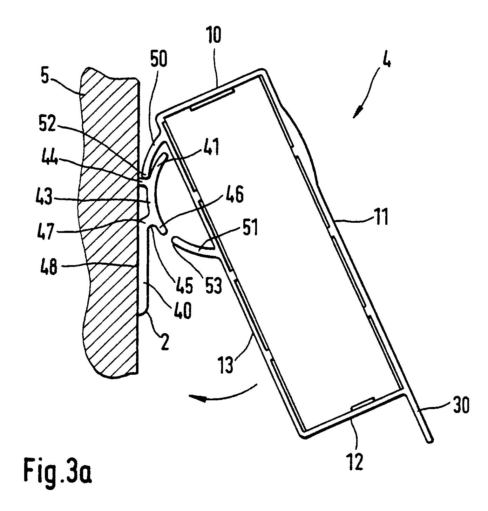

Wie weiterhin in Fig. 2a zu erkennen ist, befindet sich an derjenigen Seite der Leiterplatte 18, welche der Unterseite 12 des Moduls 4 zugewandt ist, ein weiterer (zweiter) Stekker 23 zum Anschluß der Anschluß- und Verbindungsleitungen der Endteilnehmer. Die Unterseite 12 des Moduls weist hierfür eine Ausnehmung 25 auf, durch welche ein mit den Anschluß- und Verbindungsleitungen verbundener Gegenstecker 26 mit dem zweiten Stecker 23 verbunden werden kann. Die Ausnehmung 25 kann nach der Herstellung der Strangpreßprofile zum Beispiel durch Stanzen hergestellt werden. Der zweite Stecker 23 überdeckt nach dem Einschieben der Leiterplatten 18,19 die Ausnehmung 25 an der Unterseite 12 derart, daß kein Spalt entsteht, durch den elektromagnetische Strahlung nach außen dringt. Die Modulgehäuse weisen an ihrer Rückseite 13 Kupplungsteile 50,51 zur Festlegung der Module 4 an der Schiene 2 auf. Vorteilhaft können die Kupplungsteile 50,51 bei der Herstellung der Strangpreßprofile direkt mit hergestellt werden. Die Vorderwand 11 des Modulgehäuses kann sich, wie in Fig. 3a gezeigt, ein Stück über die Unterseite 12 erstrecken, wodurch ein senkrecht von der Unterseite 12 abstehender Schenkel 30 gebildet wird, der als Handgriff das Einhängen der Module 4 in die Schiene 2 erleichtert.

In den Figuren 3a - 3c ist ein Querschnitt durch die als Haltevorrichtung vorgesehene Schiene 2 und ein einzelnes Modulgehäuse 4 ohne die darin eingesetzten Leiterplatten dargestellt. Die Schiene 2 ist als Formteil mit einem in Verschieberichtung der Module konstanten Querschnitt ausgebildet. Das Schienenformteil 2 umfaßt einen Verbindungssteg 43 an dessem oberen Ende ein Aufhängeteil 41 und an dessem unteren Ende ein Sicherungsteil 46 angeformt ist. Aufhängeteil 41, Verbindungssteg 43 und Sicherungsteil 46 bilden in dem hier gezeigten Ausführungsbeispiel ein rinnenartig gekrümmtes Formteil dessen konvexe Seite der Wand 5 zugewandt und dessen konkave Seite von der Wand wegweist. Im Anbindungsbereich von Verbindungssteg 43 und Sicherungsteil 46 ist dem Schienenformteil 2 ein weiterer Verbindungssteg 47 angeformt der mit einem Auflageteil 40 einstückig verbunden ist. Die der Wand zugewandte Seite 48 des Auflageteils 40 weist eine ebene Fläche 48 zur Auflage und Befestigung der Schiene 2 an der Wand 5 auf. Hierzu können zum Beispiel Schrauben oder ähnliche Verbindungsmittel verwandt werden. Durch die der Wand abgewandte Seite des Auflageteils 40, den weiteren Verbindungssteg 47 und die der Wand zugewandte Seite des Sicherungsteils 46 wird eine parallel zur Schiene 2 verlaufende Kehlung 45 gebildet. Die zur Wand 5 hinweisende konvex gekrümmte Seite des Aufhängeteils 41 weist eine im Querschnitt sphärische Krümmung mit einem Krümmungsmittelpunkt D auf. Ebenso weist die zur Wand hinweisende konvex gekrümmte Seite des Sicherungsteils 46 eine im Querschnitt sphärische gekrümmte Form mit dem selben Krümmungsmittelpunkt D auf. Weiterhin wird die sphärisch gekrümmte Seite des Aufhängeteils 41 durch einen im Übergangsbereich von Aufhängeteil 41 und Verbindungssteg 43 zur Wand hin abstehenden Steg 44 begrenzt.

Wie in Fig. 3a zu erkennen ist, weisen die Modulgehäuse 4 an ihrer Rückseite 13 zwei zu dem Aufhängeteil 41 und dem Sicherungsteil 46 der Schiene komplementär ausgebildete Kupplungsteile 50,51 auf. Dem oberen Randbereich der Rückwand 13 des Moduls 4 ist ein Einhängeteil 50 in Form eines davon abstehenden gekrümmten Schenkels angeformt. Etwa in der Mitte der Rückwand 13 ist ein Stützteil in Form eines zweiten gekrümmten Schenkels 51 vorgesehen. Die Länge beider Schenkel entspricht der Länge X eines Modulgehäuses. Wenn die Modulgehäuse nicht als Strangpreßprofile hergestellt werden, ist es auch möglich, die Schenkel kürzer auszubilden. Die Schenkel 50,51 sind zueinander hingekrümmt, so daß ihre freien, von der Rückseite des Moduls abstehenden Enden 52,53 einander zugewandt sind. Der Krümmungsradius der Schenkel 50,51 entspricht dem Krümmungsradius der konvex gekrümmten Seiten des Aufhängeteils 41 und des Sicherungsteils 46 der Schiene.

Der Abstand zwischen dem vom Modul (4) abstehenden Ende (52) des Schenkels (50) und dem vom Modul abstehenden Ende (53) des als Stützteil (51) vorgesehenen zweiten Schenkels ist im Querschnitt größer als die Breite des Verbindungssteges (43) zusammen mit der Breite des sich daran anfügenden Sicherungsteils (46) ausgebildet.

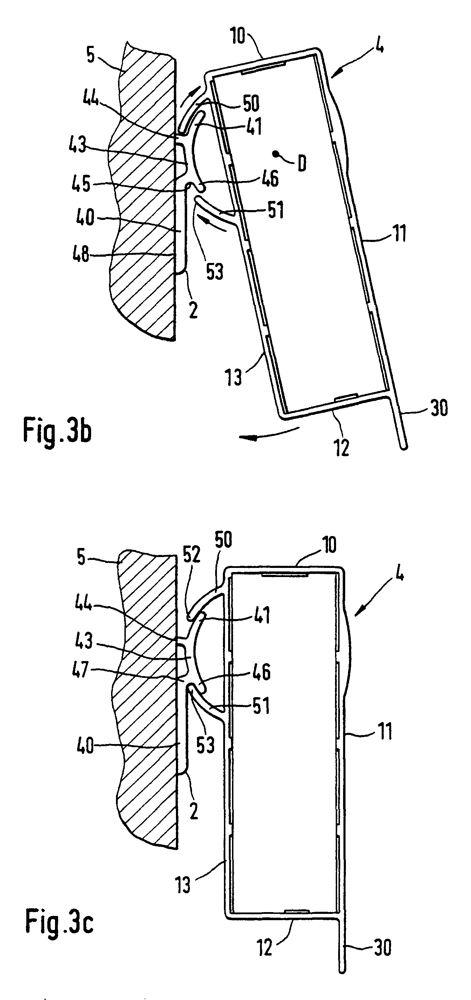

Beim Einhängen eines Moduls 4 in die Schiene 2 wird folgendermaßen verfahren. Zuerst wird, wie in Fig. 3a gezeigt, das Modul 4 in einer geneigten Lage derart gehalten, daß die durch Rückwand 13 und Oberseite 10 gebildete Kante der Wand 5 am nächsten ist und die durch Vorderwand 11 und Unterseite 12 gebildete Kante bzw. der Schenkel 30 von der Wand am weitesten entfernt ist. In dieser Lage wird zunächst der obere gekrümmte Schenkel 50 auf die Schiene 2 aufgesetzt, wobei das frei Ende 52 des Schenkels 50 in den Raum zwischen der Wand 5 und dem Auflageteil 41 eindringt, bis es auf dem Steg 44 aufliegt. Der Steg 44 verhindert, daß sich der Schenkel 50 zwischen der Wand und dem Auflageteil verklemmt. Zugleich wird durch den Auflagebereich des freien Schenkelendes 52 auf dem Steg 44 eine Drehachse gebildet, so daß das Modul 4 in Fig. 3a in Pfeilrichtung unter Zuhilfenahme seiner Gewichtskraft mit der Unterseite 12 um diese Drehachse in Richtung Wand 5 geschwenkt bzw. gedreht werden kann. Das freie Ende 53 des als Stützteil vorgesehenen unteren Schenkels 51 wird durch die Drehbewegung des Moduls 4 an der Unterkante des Sicherungsteils 46 vorbeigeführt. Diese erste Phase der Drehbewegung wird durch die in Fig. 3b gezeigte Situation beendet. Die dem Modul zugewandte Innenseite des oberen gekrümmten Schenkels 50 liegt nun ganzflächig auf dem Auflageteil 41 auf, während die Innenseite des unteren gekrümmten Schenkels 51 an der Unterkante 46 des Sicherungsteils 46 anliegt. Wird das Modul 4 nun weiter mit der Unterseite 12 in Richtung Wand 5 gedreht, so dreht es sich während dieser zweiten Phase der Drehbewegung um eine Drehachse, die durch den gemeinsamen Krümmungsmittelpunkt des Auflagebereichs des oberen Schenkels (50) auf dem Aufhängeteil (41) und des Auflagebereichs des unteren Schenkel (51) auf dem Sicherungsteil (46) verläuft und die in Fig. 3b mit D gekennzeichnet ist. Dabei gleitet der obere Schenkel 50 auf dem Auflageteil 41 und der untere Schenkel 51 auf dem Sicherungsteil in Pfeilrichtung, so daß ein gewisser Reibungswiderstand während dieser zweiten Phase zu überwinden ist. Der untere Schenkel 51 dringt solange mit seinem freien Ende 53 in die Kehlung 45 ein, bis er am Anschlagteil 40 anliegt, wodurch die Drehbewegung beendet wird. Das Modul 4 ist nun, wie in Fig. 3c gezeigt in einer lotrechten Ausrichtung mit parallel zur Wand 5 verlaufender Rückwand 13 an der Schiene 2 angeordnet. Durch das Sicherungsteil 46 sind die Module 4 gegen ein Herausrutschen im Falle eines versehentlichen Anstoßens an die Fernmeldevermittlungsanlage geschützt. Zur Lösung eines Moduls 4 von der Schiene wird die Reihenfolge der oben beschriebenen Schritte genau umgekehrt durchgeführt. Dabei lassen sich die Module nur von der Schiene 2 lösen, wenn ein entsprechend angreifendes Drehmoment zunächst eine Drehung um die durch den Krümmungsmittelpunkt D verlaufende Drehachse bewirkt, wodurch die Module besonders sicher gegen ein versehentliches Herausrutschen geschützt an der Schiene festgelegt sind.

Nach dem Einhängen in die Schiene 2 können die Module 4 in Längsrichtung der Schiene verschoben werden. Da alle Module 4 bis auf die unterschiedlichen Modullängen X den gleichen äußeren Aufbau aufweisen, kann auf diese Art der erste Stekker 21 eines Moduls mit dem als Gegenstecker ausgebildeten dritten Stecker eines Nachbarmoduls verbunden werden. Die Stecker können so weit ineinandergesteckt werden, daß die Seitenwände 14,15 benachbarter Module einander berühren und die Vorderwände 11 der Module, wie in Fig. 1 gezeigt, eine optisch einheitlich erscheinende Front bilden. Die Stromversorgungseinrichtung 3 ist äußerlich wie ein Modul 4 aufgebaut und befindet sich in Fig. 1 am ganz linken Rand der Fernmeldevermittlungsanlage. Die Stromversorgungseinheit 3 weist an wenigstens einer ihrer Seitenwände einen Stecker auf, der mit dem Stecker eines benachbarten Moduls verbindbar ist. In dem in Fig. 1 gezeigten rechten Modul 4' der Fernmeldevermittlungsanlge ist weiterhin eine zentrale Steuereinheit für alle Module vorgesehen. Die in den Seitenwänden angeordneten ersten und dritten Stecker der Module bilden eine einheitlich durchgängige Schnittstelle. Im zusammengebauten Zustand der Anlage ist jedes Modul an die Stromversorgungseinheit, die zentrale Steuereinheit und das durch alle Module hindurchgeführte Bussystem angeschlossen. Nach dem Einhängen der Module können zusätzliche Sicherungselemente wie z.B. Schraubklemmen auf die Schiene aufgesetzt werden, die unmittelbar neben der Stromversorgungseinheit 3 und neben dem Modul 4' in Fig. 1 an der Schiene befestigt werden und ein erneutes Verschieben oder ein Lösen der Steckverbindungen der Module verhindern.

## Patentansprüche

1. Fernmeldevermittlungsanlage (1) mit einer horizontal an einer Wand (5) befestigbaren Schiene (2) und daran angeordneten Modulen (4) mit Modulgehäusen und wenigstens einer in das Modulgehäuse eingesetzten Leiterplatte (18), wobei die Modulgehäuse zwei Seitenwände (14,15), eine Rückwand (13), eine Vorderwand (11), eine Oberseite (10) und eine Unterseite (12) aufweist und wobei wenigstens ein erster Stecker (21) zum Anschluß an ein Bussystem und die Stromversorgung in einer ersten Seitenwand (14) des Modulgehäuses angeordnet ist, wenigstens ein zweiter Stecker (23) für die Anschlüsse von Anschluß- und Verbindungsleitungen an dem Modulgehäuse angeordnet ist und wenigstens ein als Gegenstecker zu dem ersten Stecker (21) ausgebildeter dritter Stecker in der der ersten Seitenwand (14) gegenüberliegenden zweiten Seitenwand (15) des Moduls (4) angeordnet ist und wobei der erste Stekker (21) eines Moduls (4) durch Verschieben der Module an der Schiene (2) mit dem Gegenstecker eines benachbarten Moduls direkt verbindbar ist und wobei das Modulgehäuse mit wenigstens einem an seiner Rückwand (13) angeordneten Einhängeteil (50) in ein korrespondierendes Aufhängeteil (41) der Schiene (2) einhängbar ist, wobei die Schiene (2) mit einem in Verschieberichtung des Moduls (4) konstanten Querschnitt mit einem sich in Verschieberichtung erstreckenden, von der Wand beabstandeten oberen Aufhängeteil (41) und mit einem sich in Verschieberichtung erstreckenden, von der Wand beabstandeten unteren Sicherungsteil (46) ausgestaltet ist, und wobei das Modulgehäuse mit seinem Einhängeteil (50) das Aufhängeteil (41) hintergreift und um einen gemeinsamen Auflagebereich an der Schiene (2) schwenkbar ist und sich nach dem Einhängen mit einem Stützteil (51) entgegen einem durch die Gewichtskraft des Moduls hervorgerufenen Drehmoment am Ende der Schwenkbewegung an der Wand (5) oder der Schiene (2) abstützt, **dadurch gekennzeichnet, daß** das Stützteil (51) des Moduls (4) von der Rückwand (13) des Moduls absteht und das Modulgehäuse bei in das Aufhängeteil (41) eingehängtem Einhängeteil (50) durch eine Teilschwenkbewegung in eine Position schwenkbar ist, in welcher das Stützteil (51) das Sicherungsteil (46) hinterfaßt, und in eine Endposition bewegbar ist, in der sich das Stützteil (51) an dem Sicherungsteil (46) abstützt.

2. Fernmeldevermittlungsanlage nach Anspruch 1, **dadurch gekennzeichnet, daß** der Abstand zwischen dem vom Modul (4) abstehenden Ende (52) des Einhängeteils (50) und dem vom Modul abstehenden Ende (53) des Stützteils (51) größer ist als die Breite eines das Aufhängeteil (41) und das Sicherungsteil (46) tragenden Verbindungssteges (43) der Schiene zusammen mit der Breite des über den Verbindungssteg (43) nach unten vorstehenden Sicherungsteils (46).

3. Fernmeldevermittlungsanlage nach Anspruch 1, **dadurch gekennzeichnet, daß** sich das gegen das Sicherungsteil (46) abstützende Stützteil (51) zugleich an einem sich an den Verbindungssteg anschließenden Auflageteil (40) abstützt.

4. Fernmeldevermittlungsanlage nach Anspruch 3, **dadurch gekennzeichnet, daß** das Auflageteil (40) eine ebene Fläche (48) zur Auflage und Befestigung der Schiene (2) an der Wand (5) aufweist.

5. Fernmeldevermittlungsanlage nach Anspruch 1, **dadurch gekennzeichnet, daß** der Auflagebereich von Einhängeteil (50) und Aufhängeteil (41) und der Auflagebereich von Stützteil (46) und Sicherungsteil (51) eine im Querschnitt sphärische gekrümmte Form mit einem beiden Auflagebereichen gemeinsamen Krümmungsmittelpunkt (D) aufweisen.

6. Fernmeldevermittlungsanlage nach Anspruche 5, **dadurch gekennzeichnet, daß** das für die Auflage des Einhängeteils (50) vorgesehene sphärisch gekrümmte Flächenstück des Aufhängeteils (41) durch einen davon zur Wand (5) hin abstehenden Steg (44) begrenzt wird.

7. Fernmeldevermittlungsanlage nach Anspruch 1, **dadurch gekennzeichnet, daß** das Modulgehäuse (4) im Bereich der Vorderwand (11) einen senkrecht von der Unterseite (12) abstehenden, sich in Verlängerung der Vorderwand erstreckenden Schenkel (30) aufweist.

8. Fernmeldevermittlungsanlage nach Anspruch 1, **dadurch gekennzeichnet, daß** die zweiten Stecker (23) für die Anschlüsse der Anschluß- und Verbindungsleitungen an der Unterseite (12) des Modulgehäuses (4) angeordnet sind.

9. Fernmeldevermittlungsanlage nach Anspruch 1, **dadurch gekennzeichnet, daß** Oberseite (10), Rückwand (13), Unterseite (12) und Vorderwand (11) eines Modulgehäuses als metallisches Strangpreßprofil gefertigt sind, das mit zwei daran festlegbaren metallischen Seitenwänden oder Seitendeckeln (14,15) verschließbar ist.

10. Fernmeldevermittlungsanlage nach Anspruch 9, **dadurch gekennzeichnet, daß** die Profillänge (X) des Strangpreßprofils an die Größe der in dem Modulgehäuse (4) angeordneten Leiterplatte (18) angepaßt ist.

11. Fernmeldevermittlungsanlage nach Anspruch 10, **dadurch gekennzeichnet, daß** die Innenkontur des Strangpreßprofiles zur Führung der in das Modulgehäuse (4) eingeschobenen Leiterplatte (18) mit Nuten (27) versehen ist.

## Claims

1. A telephone exchange (1) comprising a rail (2) horizontally fixable to a wall (5) and modules (4) arranged on the rail (2) and provided with module housings and with at least one printed circuit board (18) inserted into the module housing, wherein the module housing comprises two side walls (14, 15), a rear wall (13), a front wall (11), an upper side (10) and an underside (12), and wherein at least one first plug (21) for connection to a bus system and the power supply is arranged in a first side wall (14) of the module housing, at least one second plug (23) for the connections of subscriber and junction lines is arranged on the module housing, and at least one third plug, formed as a counterplug to the first plug (21), is arranged in the second side wall (15) of the module (4) opposite the first side wall (14), and wherein the first plug (21) of a module (4) is directly connectable to the counterplug of an adjacent module by displacement of the modules on the rail (2), and wherein the module housing is suspendable, by means of at least one suspension part (50) arranged on its rear wall (13), from a corresponding hook part (41) of the rail (2), wherein the rail (2) is constructed with an upper hook part (41) spaced from the wall and extending in the displacement direction with a cross-section constant in the displacement direction of the module (4), and with a lower securing part (46) spaced from the wall and extending in the displacement direction, and wherein the module housing engages behind the hook part (41) with its suspension part (50) and is pivotable on the rail (2) about a common bearing region and, after suspension, is supported against the wall (5) or the rail (2) by means of a supporting part (51) against a turning moment caused by the weight of the module at the end of the pivoting movement, **characterised in that** the supporting part (51) of the module (4) projects from the rear wall (13) thereof and, when the suspension part (50) is suspended from the hook part (41), the module housing, by means of a partial pivoting movement, is pivotable into a position in which the supporting part (51) engages behind the securing part (46), and is movable into an end position in which the supporting part (51) is supported against the securing part (46).

2. A telephone exchange according to claim 1, **characterised in that** the distance between the end (52) of the suspension part (50) projecting from the module (4) and the end (53) of the supporting part (51) projecting from the module is greater than the width of a connecting web (43) of the rail, carrying the hook part (41) and the securing part (46), together with the width of the securing part (46) projecting downwards beyond the connecting web (43).

3. A telephone exchange according to claim 1, **characterised in that** the supporting part (51), supported against the securing part (46), is also supported against a bearing part (40) adjoining the connecting web.

4. A telephone exchange according to claim 3, **characterised in that** the bearing part (40) has a flat surface (48) for supporting and fixing the rail (2) to the wall (5).

5. A telephone exchange according to claim 1, **characterised in that** the bearing region of the suspension part (50) and the hook part (41), and the bearing region of the supporting part (51) and the securing part (46) have a curved shape spherical in cross-section with a centre of curvature (D) common to both bearing regions.

6. A telephone exchange according to claim 5, **characterised in that** the spherically curved surface portion of the hook part (41), provided for supporting the suspension part (50), is bounded by a web (44) projecting from the hook part (41) towards the wall (5).

7. A telephone exchange according to claim 1, **characterised in that** the module housing (4), in the region of the front wall (11), has a foot (30) projecting perpendicularly from the underside (12) as a continuation of the front wall.

8. A telephone exchange according to claim 1, **characterised in that** the second plugs (23) for the connections of the subscriber and junction lines are arranged on the underside (12) of the module housing (4).

9. A telephone exchange according to claim 1, **characterised in that** the upper side (10), rear wall (13), underside (12) and front wall (11) of a module housing are formed as an extruded metal section closable by two metal side walls or side covers (14, 15) fixable thereto.

10. A telephone exchange according to claim 9, **characterised in that** the length (X) of the extruded section is adapted to the size of the printed circuit board (18) arranged in the module housing (4).

11. A telephone exchange according to claim 10, **characterised in that** the inner contour of the extruded section is provided with grooves (27) for guiding the printed circuit board (18) inserted into the module housing (4).

## Revendications

1. Installation de télécommunication (1) avec un rail (2) pouvant être fixé horizontalement sur une paroi (5) et des modules (4) munis de boîtiers, disposés sur ce dernier, et avec au moins une plaquette (18) logée dans le boîtier de module, les boîtiers de modules présentant deux parois latérales (14, 15), une paroi arrière (13), une paroi avant (11), un côté supérieur (10) et un côté inférieur (12), et au moins un premier connecteur (21) étant disposé dans une première paroi latérale (14) du boîtier de module pour le raccordement à un système de bus et à l'alimentation en courant, au moins un deuxième connecteur (23) étant disposé sur le boîtier de module pour les raccordements aux lignes d'abonnés et de jonction, et au moins un troisième connecteur, réalisé sous forme de contre-fiche du premier connecteur (21), étant disposé dans la seconde paroi latérale (15) du module (4) opposée à la première paroi latérale (14), et le premier connecteur (21) d'un module (4) pouvant être raccordé directement à la contre-fiche d'un module adjacent par déplacement des modules sur le rail (2), et le boîtier de module pouvant être accroché par au moins une pièce d'accrochage (50), disposée sur sa paroi arrière (13), dans une pièce de suspension correspondante (41) du rail (2), le rail (2), d'une section transversale constante dans le sens de déplacement du module (4), étant configuré avec une pièce de suspension (41) supérieure, s'étendant dans le sens de déplacement et distante de la paroi, et avec une pièce de blocage inférieure (46) s'étendant dans le sens de déplacement et distante de la paroi, et le boîtier de module enserrant par sa pièce d'accrochage (50) la pièce de suspension (41), pouvant pivoter sur le rail (2) autour d'une zone d'appui commune, et s'appuyant après l'accrochage par une pièce d'appui (51), à la fin du mouvement de pivotement, sur la paroi (5) ou le rail (2), contre un couple provoqué par le poids du module, **caractérisée en ce que** la pièce d'appui (51) du module (4) dépasse de la paroi arrière (13) du module, et **en ce que** le boîtier de module, en position d'accrochage de la pièce (50) dans la pièce de suspension (41), peut pivoter par un mouvement de pivotement partiel dans une position dans laquelle la pièce d'appui (51) enserre la pièce de blocage (46), et peut être amené dans une position extrême dans laquelle la pièce d'appui (51) s'appuie sur la pièce de blocage (46).

2. Installation de télécommunication suivant la revendication 1, **caractérisée en ce que** la distance entre l'extrémité (52) de la pièce d'accrochage (50), dépassant du module (4), et l'extrémité (53) de la pièce d'appui (51), dépassant du module, est plus élevée que la largeur d'une traverse de jonction (43) du rail, supportant la pièce de suspension (41) et la pièce de blocage (46), avec la largeur de la pièce de blocage (46) dépassant vers le bas de la traverse de jonction (43).

3. Installation de télécommunication suivant la revendication 1, **caractérisée en ce que** la pièce d'appui (51), s'appuyant sur la pièce de blocage (46), s'appuie simultanément sur une pièce de support (40) consécutive à la traverse de jonction.

4. Installation de télécommunication suivant la revendication 3, **caractérisée en ce que** la pièce de support (40) présente une surface plane (48) pour l'appui et la fixation du rail (2) sur la paroi (5).

5. Installation de télécommunication suivant la revendication 1, **caractérisée en ce que** la zone d'appui de la pièce d'accrochage (50) et de la pièce de suspension (41), et la zone d'appui de la pièce d'appui (46) et de la pièce de blocage (51), présentent en coupe transversale une forme incurvée sphérique, avec un centre de courbure (D) commun aux deux zones d'appui.

6. Installation de télécommunication suivant la revendication 5, **caractérisée en ce que** la section superficielle incurvée sphérique de la pièce de suspension (41), prévue pour l'appui de la pièce d'accrochage (50), est délimitée par une traverse (44) dépassant de cette pièce en direction de la paroi (5).

7. Installation de télécommunication suivant la revendication 1, **caractérisée en ce que** le boîtier de module (4) présente, dans la zone de la paroi avant (11), une branche (30) dépassant perpendiculairement du côté inférieur (12) et s'étendant dans le prolongement de la paroi avant.

8. Installation de télécommunication suivant la revendication 1, **caractérisée en ce que** les deuxièmes connecteurs (23) pour les raccordements aux lignes d'abonnés et de jonction sont disposés sur le côté inférieur (12) du boîtier de module (4).

9. Installation de télécommunication suivant la revendication 1, **caractérisée en ce que** le côté supérieur (10), la paroi arrière (13), le côté inférieur (12) et la paroi avant (11) d'un boîtier de module sont fabriqués sous forme de profil métallique extrudé, qui peut être fermé par deux parois latérales ou couvercles latéraux (14, 15) métalliques, pouvant être fixés sur ce dernier.

10. Installation de télécommunication suivant la revendication 9, **caractérisée en ce que** la longueur (X) du profil extrudé est adapté à la dimension de la plaquette (18) disposée dans le boîtier de module (4).

11. Installation de télécommunication suivant la revendication 10, **caractérisée en ce que** le contour intérieur du profilé extrudé est muni de rainures (27) pour le guidage de la plaquette (18) insérée dans le boîtier de module (4).
